# EUROPÄISCHE PATENTSCHRIFT

(11) **EP 4 412 867 B1**
(45) Veröffentlichungstag und Bekanntmachung des Hinweises auf die Patenterteilung: **05.03.2025**
(21) Anmeldenummer: 22798329.3
(22) Anmeldetag: 05.10.2022
(51) Int. Cl.: B60N 2/20, B60N 2/42, B60N 2/427

(54) **VORRICHTUNG ZUM SCHNELLEN ROTIEREN EINER BAUGRUPPE EINES FAHRZEUGSITZES**
DEVICE FOR QUICKLY ROTATING AN ASSEMBLY OF A VEHICLE SEAT
DISPOSITIF DE ROTATION RAPIDE D'UN MODULE DE SIÈGE DE VÉHICULE

(30) Priorität: 06.10.2021 DE 102021125946
(43) Veröffentlichungstag der Anmeldung: 14.08.2024
(73) Patentinhaber: Brose Sitech GmbH, 38442 Wolfsburg (DE); Brose Sitech Sp. z o.o., 59-101 Polkowice (PL)
(72) Erfinder: BARKOW, Tomas, 38102 Braunschweig (DE); PYZIAK, Lukasz, 48 303 Nysa (PL); DOMINIKOWSKI, Michal, 66-008 Swidnica (PL)
(74) Vertreter: Gulde & Partner
(86) Internationale Anmeldenummer: PCT/EP2022/077652
(87) Internationale Veröffentlichungsnummer: WO 2023/057490

(56) Entgegenhaltungen:
- DE-A1- 102013 207 027
- DE-U1- 202011 052 357

## Beschreibung

Die Erfindung betrifft eine Vorrichtung zum schnellen Rotieren einer rotierbaren Baugruppe eines Fahrzeugsitzes, wobei die rotierbare Baugruppe eine Lehne oder eine Sitzfläche des Fahrzeugsitzes ist, und bei der ein Verriegelungselement mittels einer Nocke gesichert wird und mithilfe einer anderen Nocke entriegelt wird. Die Rotation der antreibenden Welle, auf der die Nocken angeordnet sind, wird zudem auf ein Zahnelement übertragen, womit eine Rotation der Baugruppe verwirklicht wird. Die Erfindung betrifft ebenso einen Fahrzeugsitz mit einer solchen Vorrichtung in mindestens zweifacher Anordnung und ein Fahrzeug mit mindestens einer solchen Vorrichtung.

Verstellbare Fahrzeugsitze sollen in Gefahrensituationen wie bei einem bevorstehenden Unfall automatisch und möglichst schnell in eine aufrechte und crashsichere Position verstellt werden. Damit sollen darauf sitzende Fahrzeuginsassen besser vor Verletzungen geschützt werden. Dabei werden nicht nur Lehnen der Fahrzeugsitze aufgerichtet, sondern auch die Ausrichtung von Sitzflächen zurückgestellt, die in einer Liegeposition nach hinten verkippt sind.

Um Lehnen von Fahrzeugsitzen aufzurichten, sind beispielsweise Drehbeschläge bekannt, die in jeder Position crashsicher sind, jedoch ist deren Wirkungsgrad bei der Verstellung der Lehne sehr gering, eine schnelle Verstellung im Crashfall also nicht möglich. Damit der gewünschte Wirkungsgrad realisiert werden kann, müssen diese Beschläge mit größeren und/oder mehreren Motoren kombiniert werden. Es sind außerdem 2-Türer-Beschläge bekannt, die entriegelt werden können, aber in der vorderen, aufgestellten Position nicht crashsicher sind.

Sie sind daher für den vorgesehen Einsatz für eine schnelle Verstellung einer Lehne in eine crashsichere Position nicht geeignet. Eine Vorrichtung zum schnellen Rotieren einer rotierbaren Baugruppe eines Fahrzeugsitzes, mit einer ersten Nocke, einer zweiten Nocke, einer Antriebswelle und einem Ritzel ist aus der DE202011052357U1 bekannt.

Der Erfindung liegt nun die Aufgabe zugrunde, eine Lösung zum schnellen Rotieren von

Lehnen und/oder Sitzflächen eines Fahrzeugsitzes vorzuschlagen, die einen geringen Bauraumbedarf aufweist und vor allem crashsicher ist.

Die Aufgabe der Erfindung wird gelöst mit einer Vorrichtung nach Anspruch 1, einem Fahrzeugsitz nach Anspruch 9 und einem Fahrzeug nach Anspruch 10. Weitere bevorzugte Ausgestaltungen der Erfindung ergeben sich aus den übrigen, in den Unteransprüchen genannten Merkmalen.

Die erfindungsgemäße Vorrichtung zum schnellen Rotieren einer rotierbaren Baugruppe eines Fahrzeugsitzes, wobei die rotierbare Baugruppe eine Lehne oder eine Sitzfläche ist, ist gebildet mit
- einer ersten Nocke, einer zweiten Nocke, einer Antriebswelle und einem Ritzel, wobei die erste Nocke und das Ritzel drehfest und die zweite Nocke drehbar auf der Antriebswelle angeordnet ist, die Antriebswelle baugruppenfest rotierbar gelagert ist, die erste Nocke mit der zweiten Nocke mittels eines Federelementes gekoppelt ist, sodass die zweite Nocke bei einer Rotation der Antriebswelle mitrotiert, und die zweite Nocke eine erste und eine zweite Verriegelungskontur aufweist,
- einem Verriegelungselement mit einem Verriegelungsbereich und einem Entriegelungsbereich, das baugruppenfest rotierbar gelagert ist,
- einem ortsfesten Rastelement, und
- einem um die Baugruppendrehachse rotierbaren Zahnelement,
wobei diese Elemente ausgebildet und angeordnet sind, sodass
- in einer ersten Verriegelungsposition
   - das Verriegelungselement im Eingriff mit dem Rastelement steht, und
   - die erste Verriegelungskontur der zweiten Nocke mit dem Verriegelungsbereich des Verrieglungselementes in berührendem Kontakt steht und dieses in seiner Position sichert, und
- während der Rotation der Antriebswelle
   - die erste Nocke auf den Entriegelungsbereich des Verriegelungselementes trifft und damit dieses aus dem Eingriff mit dem Rastelement herausrotiert, während
   - die erste Verriegelungskontur der zweiten Nocke aus dem Verriegelungsbereich des Verriegelungselementes rotiert wird, und
   - das Ritzel die Rotation auf das Zahnelement überträgt, wobei das Zahnelement um die Baugruppendrehachse und damit relativ zu dem Rastelement rotiert wird, bis ein Eingriff mit dem Rastelement die Rotationsbewegung begrenzt, und
- beim weiteren Kämmen des Ritzels am Zahnelement
   - eine Rotation der rotierbaren Baugruppe um die Baugruppendrehachse resultiert, bis die zweite Verriegelungskontur der zweiten Nocke auf den Verriegelungsbereich des Verriegelungselementes trifft, der ausgebildet ist, die weitere Rotation der zweiten Nocke aufzuhalten, bis das Verriegelungselement mit dem Rastelement für eine zweite Verriegelungsposition in Eingriff gelangt, und
   - die Rotation der zweiten Nocke mittels der Federkraft des Federelementes nachgeführt wird und damit die zweite Verriegelungskontur zu dem Verriegelungsbereich des Verriegelungselementes rotiert, um dieses in seiner Position zu sichern.

Die erfindungsgemäße Vorrichtung bewirkt durch das Zusammenspiel der vorhandenen Komponenten beziehungsweise Elemente ein schnelles Rotieren einer rotierbaren Baugruppe eines Fahrzeugsitzes. Eine solche Baugruppe soll eine Lehne des Fahrzeugsitzes oder eine Sitzfläche eines Fahrzeugsitzes sein. Mit der Lehne ist dabei eine verstellbare Rückenlehne eines Fahrzeugsitzes gemeint. Die Sitzfläche ist als Baugruppe ebenfalls rotierbar gelagert, sie kann also durch Rotation insbesondere nach hinten verkippt werden, um die Sitzfläche für eine Liegeposition des Fahrzeugsitzes geeignet auszurichten. Diese Rotation wird bevorzugt mittels einer Kniehebelkinematik ausgeführt. Ein Fahrzeug kann dabei ein beliebiges Fahrzeug sein, das einen Fahrzeugsitz mit einer durch Rotation verstellbaren Rückenlehne und/oder durch Rotation verstellbaren Sitzfläche aufweist. Darunter sind neben Personenkraftwagen auch Lastkraftwagen und Busse zu verstehen.

Das Rotieren der rotierbaren Baugruppe im Sinne der Vorrichtung ist als rotieren der Lehne beziehungsweise der Sitzfläche nach vorn zu verstehen, bis hin in eine nahezu aufrechte Position der Lehne beziehungsweise nahezu waagerechte Position der Sitzfläche. Ausgangsposition ist dabei eine beliebige zurückgeneigte Position des Fahrzeugsitzes bis hin zu einer Liegeposition des Sitzes. Ein schnelles Rotieren zielt darauf ab, dass die Rotation in einer sehr kurzen Zeitspanne verwirklicht werden kann, wie beispielsweise zwischen dem Detektieren eines bevorstehenden Unfalls und seinem Eintreten.

Ausgangspunkt der Rotation ist eine Antriebswelle mit zwei Nocken und einem Ritzel. Ihre Anordnung und konkrete Ausformung sind so gewählt, dass sämtliche der genannten Komponenten beziehungsweise Elemente in der nachfolgend erläuterten Weise funktional ineinander greifen und/oder zusammenwirken.

Die Antriebswelle ist baugruppenfest rotierbar gelagert, das heißt, sie ist je nach Ausführungsvariante in einer Lehne oder einer Sitzfläche an einer Position der Lehne beziehungsweise der Sitzfläche angeordnet und verbleibt dort, kann jedoch bestimmungsgemäß rotieren. Diese Position kann beispielsweise ein Rahmen der Lehne beziehungsweise der Sitzfläche sein. Auf der Antriebswelle ist eine erste Nocke angeordnet, die wegen ihrer Funktion auch als Entriegelungsnocke bezeichnet werden kann, wie sich noch zeigen wird. Diese erste Nocke ist drehfest auf der Antriebswelle angeordnet, sie dreht sich also mit der Antriebswelle mit.

Die zweite Nocke kann auch als Sicherungsnocke bezeichnet werden und ist drehbar auf der Antriebswelle angeordnet. Sie kann also unabhängig von der Antriebswelle rotieren. Damit auch sie der Rotation der Antriebswelle folgt beziehungsweise folgen kann, ist sie mittels eines Federelementes mit der ersten Nocke gekoppelt. Dieses Federelement stellt einen Eingriff beziehungsweise eine Kopplung zwischen den beiden Nocken her, sodass die zweite Nocke bei einer Rotation der Antriebswelle nachgeführt wird und mit der Antriebswelle und der ersten Nocke mitrotiert.

Außerdem weist die zweite Nocke eine erste Verriegelungskontur und eine zweite Verriegelungskontur auf. Darunter soll jeweils eine Ausgestaltung oder Ausformung der Kontur der zweiten Nocke verstanden werden, die geeignet ist, im Zusammenspiel mit einem anderen Objekt dieses in einem Verriegelungszustand zu halten beziehungsweise zu sichern. Die Größe und Form der Verriegelungskonturen ergibt sich aus der konkreten Anordnung des anderen Objektes.

Dieses ist im Fall der erfindungsgemäßen Vorrichtung das Verrieglungselement, das zudem einen Verriegelungsbereich und einen Entriegelungsbereich aufweist. Das Verrieglungselement ist baugruppenfest rotierbar gelagert, weist also einen festen Drehpunkt an der Baugruppe auf. Auch hier kann der Fixpunkt vorzugsweise am Rahmen der Lehne beziehungsweise der Sitzfläche vorgesehen sein. Das Verriegelungselement weist einen Verriegelungsbereich auf. Dies ist der Bereich, in dem das Verriegelungselement mit der ersten und später zweiten Verriegelungskontur der zweiten Nocke zusammenwirkt, um das Verriegelungselement in einer Verriegelungsposition zu sichern. Wirken die erste Verriegelungskontur der zweiten Nocke und der Verriegelungsbereich des Verriegelungselementes zusammen, ergibt sich die Ausgangsbedingung für eine erste Verriegelungsposition, bei der zweiten Verriegelungskontur der zweiten Nocke mit dem Verriegelungsbereich des Verriegelungselementes die für die zweite Verriegelungsposition. Der Verriegelungsbereich des Verriegelungselementes ist vorzugsweise als Ausformung oder Erhebung in der der zweiten Nocke zugewandten Kontur des Verriegelungselementes ausgeführt.

Das Verriegelungselement weist außerdem einen Entriegelungsbereich auf, in dem er mit der ersten Nocke während der Rotation der Antriebswelle zusammenwirken kann. Dazu ist auch hier die Kontur des Verriegelungselementes korrespondierend ausgebildet, in diesem Fall korrespondierend zu der ersten Nocke.

Die Vorrichtung weist ferner ein ortsfestes Rastelement auf. Ortsfest meint dabei, dass das Rastelement keine Verschiebung und/oder Rotation während der Rotation der Baugruppe erfährt. Das Rastelement für eine schnelle Rotation der Lehne kann beispielsweise fest mit der Tragstruktur der Sitzfläche verbunden sein. Das Rastelement kann grundsätzlich auch für eine Bewegung und/oder Rotation vorgesehen sein, wesentlich ist aber, dass es während des Rotierens der Baugruppe seine Position und/oder Ausrichtung nicht ändert.

Das Verriegelungselement steht in der Ausgangsposition mit dem Rastelement in Eingriff (erster Eingriffsbereich). Diese Position wird durch das Zusammenwirken der ersten Verrieglungskontur der zweiten Nocke und des Verriegelungsbereiches des Verriegelungselementes gesichert, da diese in den benannten Bereichen in berührendem Kontakt stehen und dabei insbesondere eine Rotation des Verriegelungselementes nicht zulassen. Aus dieser Kombination ergibt sich die erste Verriegelungsposition, die auch die Ausgangsposition für die schnelle Rotation der Baugruppe ist.

Damit eine Rotation der rotierbaren Baugruppe möglich wird, ist in der erfindungsgemäßen Vorrichtung ein Zahnelement vorgesehen, dass um die Baugruppendrehachse rotierbar gelagert ist. Dieses Zahnelement kann also um eine Achse rotieren, die mit der Drehachse der Baugruppe identisch ist. Diese Rotation ist jedoch begrenzt, indem ein Eingriff zwischen dem Zahnelement und dem Rastelement vorgesehen ist, der eine Rotation des Zahnelementes nur im vorgesehenen Maße erlaubt, wie noch gezeigt wird.

Die Rotation des Zahnsegmentes und die Rotation der rotierbaren Baugruppe wird erreicht, weil das auf der Antriebswelle angeordnete Ritzel deren Rotationsbewegung auf das Zahnelement überträgt. Dabei rotiert das Zahnelement bis zu dem zuvor benannten Anschlag in Relation zu dem Rastelement. Der genannte Anschlag beziehungsweise Eingriff kann beispielsweise mit einer Ausnehmung im Rastelement und einem korrespondierenden Pin am Zahnsegment verwirklicht sein, sodass die Rotation beim Anschlag des Pins am Ende der Ausnehmung begrenzt wird.

Während dieses ersten Zeitraums der Rotation der Antriebswelle bis zum Begrenzen der Rotationsbewegung des Zahnelementes erfolgen nahezu zeitgleich die Entriegelung des Verriegelungselementes und die Aufhebung seiner Sicherung. Um das Verriegelungselement zu entriegeln, muss die Sicherung durch das Zusammenwirken der Verriegelungskontur der zweiten Nocke und des Verriegelungsbereiches der Verriegelungselementes aufgehoben werden. Dies wird erreicht, da die zweite Nocke mittels des Federelementes bei der Rotation der Antriebswelle mitgenommen wird und so aus der ersten Verriegelungsposition herausrotiert. Während dieser Rotation wird auch die erste Nocke bewegt und trifft dabei auf den Entriegelungsbereich des Verriegelungselementes. Da dessen Position nun nicht mehr durch die zweite Nocke gesichert wird, kann das Verriegelungselement um seine Drehachse rotieren und löst so den Eingriff mit dem Rastelement.

Da nun die Rotationsbewegung des Zahnelementes begrenzt und seine weitere Rotation verhindert ist, jedoch das Ritzel weiterhin die Rotation der Antriebswelle auf das Zahnelement überträgt, ergibt sich eine Rotation der rotierbaren Baugruppe. Dabei rotieren auch die erste und die zweite Nocke zunächst weiter und die erste Nocke rotiert aus dem Entriegelungsbereich des Verriegelungselementes heraus.

Die zweite Nocke rotiert solange weiter, bis ihre zweite Verriegelungskontur auf den Verriegelungsbereich des Verriegelungselementes trifft. Da das Verriegelungselement noch aus seiner Ausgangsposition herausrotiert ist, wirkt der Verriegelungsbereich als Hindernis für die Rotation der zweiten Nocke, während sich die Antriebswelle mit der ersten Nocke weiter dreht.

Da die erste Nocke und die zweite Nocke mittels des Federelementes gekoppelt sind, wird dieses Federelement nun gespannt. Die Rotation der Antriebswelle wird dadurch nicht wesentlich beeinträchtigt. Das Rotieren der rotierbaren Baugruppe wird fortgesetzt. Dabei wird das Verriegelungselement in Richtung eines zweiten Eingriffsbereiches des Rastelementes bewegt, mit dem das Verriegelungselement in Eingriff gelangen soll. Ist die Vorwärtsbewegung ausreichend weit erfolgt, kann das Verriegelungselement in die Eingriffsposition mit dem Rastelement gelangen, in dem es in seine Ausgangsposition zurückrotiert, umgangssprachlich also in die Zielposition kippt beziehungsweise einklinkt. Diese Position ist die Ausgangsbedingung der zweiten Verriegelungsposition. Dabei wird auch die Lage des Verriegelungsbereiches des Verriegelungselementes verändert, sodass die Federkraft des gespannten Federelementes groß genug ist, die Rotation der zweiten Nocke weiterbeziehungsweise nachzuführen. Dadurch wird die zweite Verriegelungskontur zu dem Verriegelungsbereich des Verriegelungselementes, also seine unmittelbare Nähe, gebracht, dass dieses in seiner Position gesichert ist. Dabei kann aber auch ein berührender Kontakt zwischen dem Verriegelungsbereich des Verriegelungselementes und der zweiten Verriegelungskontur hergestellt werden, er ist jedoch für das Sichern nicht zwingend erforderlich. In dieser Gesamtheit ist nun die zweite Verriegelungsposition, also die Zielposition beim Rotieren der rotierbaren Baugruppe erreicht.

Mit der erfindungsgemäßen Vorrichtung kann nun eine verstellbare Rückenlehne oder Sitzfläche aus einer beliebig nach hinten geneigten Position schnell nach vorn rotiert werden. Durch die Ausgestaltung der Vorrichtung mit Nocken und korrespondierenden Verriegelungskonturen beziehungsweise Verriegelungsbereichen ist die Vorrichtung auch crashsicher, die Position der Baugruppe bleibt also auch bei erhöhten Krafteinwirkungen wie einem Unfall sicher erhalten.

Um den größten Nutzen aus der erfindungsgemäßen Vorrichtung zu ziehen, ist vorgesehen, diese Vorrichtung mindestens zweifach in beziehungsweise an einem Fahrzeugsitz anzuordnen, und zwar vorzugsweise jeweils an den Seiten der jeweiligen Baugruppe und weiter bevorzugt dort jeweils nach außen gerichtet bezogen auf die Baugruppe. So kann ein Fahrzeugsitz vorgesehen sein, der mit jeweils zwei der beschriebenen Vorrichtungen an der Lehne und/oder der Sitzfläche ausgebildet ist. Beispielsweise ist an einer verstellbaren Lehne also jeweils an ihren Seiten eine Vorrichtung der beschriebenen Art und gegebenenfalls in Ausgestaltungen wie nachfolgend beschrieben vorgesehen. Dabei kann die Antriebswelle jeweils für jede Vorrichtung allein vorgesehen sein, eine gemeinsame Antriebswelle liegt aber durchaus im Rahmen der Erfindung. Im Falle eigenständiger Antriebswellen der beiden Vorrichtungen sollten sie jedoch gleichzeitig und in gleichem Maße angetrieben werden, um ein Verdrehen und/oder Verkanten der Baugruppe beim Rotieren zu verhindern. Dies kann beispielsweise durch einen gemeinsamen Antrieb der Antriebswellen verwirklicht werden.

In einer ersten bevorzugten Ausgestaltung der erfindungsgemäßen Vorrichtung wird die Antriebswelle mittels eines Motors, eines Gasgenerators oder einer Federeinrichtung angetrieben. Ein motorischer Antrieb sollte dabei allein zum Antrieb der Antriebswelle in der erfindungsgemäßen Vorrichtung vorgesehen und mit der Energieversorgung des Fahrzeuges gekoppelt sein. Vorzugsweise ist ein solcher motorischer Antrieb ein Elektromotor und weiter bevorzugt ein Stellmotor. Stellmotoren erlauben neben dem Antrieb der Antriebswelle auch die Bestimmung der bereits absolvierten Rotation beziehungsweise des Rotationswinkels der Motorwelle und somit der Antriebswelle, sodass ein Stellmotor zum Abschluss des Rotierens der rotierbaren Baugruppe abgeschaltet werden kann, um keine weitere Rotation auf die Antriebswelle aufzubringen.

Ein Gasgenerator enthält einen Festtreibstoff und eine Zündeinheit. Letztere wird im Einsatzfall durch einen Stromimpuls gezündet. Das dabei entstehende heiße Gas kann genutzt werden, um über eine geeignete Mechanik die Antriebswelle anzutreiben und zu rotieren.

Von einer Verbindung zu einer fahrzeugeigenen Energiequelle oder einem Energiespeicher unabhängig ist eine Federeinrichtung zum Antrieb der Antriebswelle. Dazu weist die Federeinrichtung mindestens ein Federelement auf, das in der Ausgangsposition in einer vorgespannten Position gehalten ist. Eine solche Feder kann beispielsweise eine Schraubenfeder oder eine Gasdruckfeder sein. Die Federeinrichtung umfasst ferner einen Auslösemechanismus, um die vorgespannte Feder zu lösen, sodass diese sich entspannt und dabei die Antriebswelle des erfindungsgemäßen Vorrichtung antreibt. Neben der Unabhängigkeit von einer Energieversorgung ist eine Ausführung mit einer Federeinrichtung auch deswegen von Vorteil, weil sie ein sehr schnelles Rotieren der Baugruppe ermöglicht. Der Federweg der in der Federeinrichtung vorgesehenen mindestens einen Feder bestimmt den Rotationswinkel der Antriebswelle und sollte entsprechend ausgewählt werden.

In einer zweiten Ausgestaltung der Erfindung weist das Zahnelement einen Eingriff mit einem baugruppenfest gelagerten Bauelement auf, um die Relativbewegung der rotierbaren Baugruppe in Bezug zu dem Zahnelement zu begrenzen. Hier ist vorgesehen, die Rotationsbewegung der rotierbaren Baugruppe zu begrenzen, um ein Überdrehen der Lehne beziehungsweise der Sitzfläche und ein Rotieren über das Zielmaß hinaus zu vermeiden. Dies kann erreicht werden, indem ein Eingriff zwischen dem Zahnelement und einem beliebigen, baugruppenfest gelagerten Bauelement eingerichtet ist, der eine Rotation nur in gewünschtem Maß zulässt. Das baugruppenfest gelagerte Bauteil kann beispielsweise der Rahmen der Lehne oder der Sitzfläche sein. Insbesondere kann vorgesehen sein, dass das Zahnelement eine Ausnehmung aufweist und an dem baugruppenfest gelagerten Bauteil ein Stift oder Pin angeordnet ist, der in die Ausnehmung eingreift und bei Erreichen der maximal gewünschten Rotation an den Enden der Ausnehmung anschlägt und diese so begrenzt. So kann sichergestellt werden, dass die rotierbare Baugruppe höchstens in die crashsichere Position rotiert, in der die Einrichtungen zum Schutz der Fahrzeuginsassen ihre Wirkung optimal entfalten können.

In einer nächsten Ausgestaltung der Erfindung weist das Rastelement einen Anschlag und/oder im Bereich des Eingriffs für die zweite Verriegelungsposition angefaste Kanten auf, um das Verriegelungselement in die zweite Verriegelungsposition zu leiten. Um das Verriegelungselement schnell und sicher in die zweite Verriegelungsposition zu führen und das Risiko einer Fehlfunktion infolge äußerer Einflüsse zu mindern, kann es sinnvoll sein, wenn an dem Rastelement ein Anschlag vorgesehen ist, der eine weitere Vorwärtsbewegung verhindert und das Einrotieren beziehungsweise Einklinken des Verriegelungselementes in den zweiten Eingriffsbereich des Rastelementes zu erzwingen. Das Verrieglungselement kann also nicht über den zweiten Eingriffsbereich hinaus geschoben werden.

Alternativ oder zusätzlich kann vorgesehen sein, dass im Bereich des Eingriffs des Verriegelungselementes im Rastelement zumindest bereichsweise angefaste beziehungsweise angeschrägte Kanten ausgebildet sind, sodass das Verriegelungselement in die zweite Verriegelungsposition hineingleiten kann. Dies soll die Herstellung des Eingriffs im zweiten Eingriffsbereich erleichtern. Diese angefasten beziehungsweise angeschrägten Kanten können gerade oder mit einem oder mehreren Radien verlaufen.

Eine weitere Ausgestaltung der Erfindung liegt vor, wenn das Ritzel nicht als Vollkreis ausgebildet ist, sondern nur als Kreissektor, dessen Öffnungswinkel so weit reduziert ist, dass lediglich der notwendige Bewegungsübertrag auf das Zahnelement erfolgt. Da bekannt ist, wie weit die Antriebswelle rotieren muss, um die notwendige Rotation der rotierbaren Baugruppe zu verwirklichen, kann in Verbindung mit den übrigen geometrischen Randbedingungen im Zusammenspiel der erfindungsgemäß vorgesehenen Elemente der Vorrichtung auch bestimmt werden, wie viele Zähne das Ritzel entlang seines Umfangs aufweisen muss und welche Umfangslänge dafür erforderlich ist. Damit ergibt sich der Öffnungswinkel des Kreissektors für das Ritzel. Eine solche Optimierung des Ritzels auf den notwendigen Bewegungsübertrag spart Bauraum und bei der Herstellung des Ritzels auch Material ein.

Die erfindungsgemäße Vorrichtung kann mit einer Steuereinrichtung des Fahrzeugs verbunden sein, um bei einem bevorstehenden Unfall ausgelöst zu werden. Fahrzeuge heutiger Bauart erfassen üblicherweise ihre Umgebung und den umgebenden Verkehr. Daraus können sie die Wahrscheinlichkeit eines bevorstehenden Unfalls bestimmen (auch Crash-Detection genannt). Dies erfolgt in der Regel mittels einer Recheneinheit des Fahrzeugs. Wird ein unvermeidlicher Unfall detektiert beziehungsweise eine ausreichend hohe Wahrscheinlichkeit für sein Eintreten, löst diese Recheneinheit direkt oder über das Zusammenwirken mit weiteren dezentralen Recheneinheiten einzelner Sicherheitseinrichtungen eben diese Sicherheitseinrichtungen aus, um den oder die Fahrzeuginsassen zu schützen. In dieser Ausgestaltung der Erfindung ist vorgesehen, dass dieser Wirkmechanismus auch die Vorrichtung zum schnellen Rotieren einer rotierbaren Baugruppe eines Fahrzeugsitzes umfasst, die Vorrichtung also mit der Steuereinrichtung verbunden ist, um bei einem bevorstehenden Unfall das schnelle Rotieren der Lehne beziehungsweise der Sitzfläche mittels der erfindungsgemäßen Vorrichtung auszulösen.

Eine vorteilhafte Ausgestaltung der Erfindung sieht vor, dass die Rotation der Baugruppe zurückzustellen ist. Es können Situation auftreten, in der die Vorrichtung die Baugruppe bestimmungsgemäß rotiert hat, beispielsweise weil ein Unfall bevorstand. Konnte dieser Unfall vermieden werden und/oder sind nur geringfügige Schäden aufgetreten, die den Fahrzeugsitz und seine Funktionalität nicht beeinträchtigen, kann es gewünscht sein, dass die Baugruppe zurückgestellt werden soll und somit aus der zweiten Verriegelungsposition (Zielposition) in die erste Verriegelungsposition (Ausgangsposition) zurückgeführt werden soll. Dabei muss die Rotation der Antriebswelle rückgängig gemacht werden. Bei der Umkehr der Rotation kehren sich die zuvor beschriebenen Abläufe und das Zusammenwirken der Elemente der Vorrichtung um, sodass sie in ihre Ausgangsposition gelangt und wieder betriebsbereit ist.

Diese Rückstellung kann im einfachsten Fall manuell ausgelöst werden, beispielsweise wenn das Fahrzeug nach einem der beschriebenen Ereignisse in einer Werkstatt geprüft wird. Es kann aber auch vorgesehen sein, dass die Rückstellung motorisch erfolgt, indem beispielsweise ein Elektromotor mit einer entsprechenden Übersetzung auf das Ritzel vorgesehen ist, um die Rotation der Antriebswelle rückgängig zu machen. Ist der Antrieb der Antriebswelle bereits motorisch vorgesehen, kann auch mittels dieses Motors und eine Rückwärtsrotation die Rückstellung der Lehen erfolgen.

Eine weitere Ausgestaltung der erfindungsgemäßen Vorrichtung besteht darin, die Geschwindigkeit und/oder die aufgewandte Kraft beim schnellen Rotieren der rotierbaren Baugruppe in Abhängigkeit vom Gewicht der auf dem Fahrzeugsitz befindlichen Person anzupassen. Der Kraftaufwand beim Rotieren der Baugruppe ist abhängig von der auf dem Fahrzeugsitz befindlichen Person, insbesondere ihrem Gewicht. So lässt sich eine Lehne oder eine Sitzfläche mit weniger Kraft rotieren, wenn eine zierliche Person den Fahrzeugsitznutzt, als wenn eine große, kräftige Person darauf sitzt. Im Umkehrschluss bedeutet dies, dass das Rotieren der Baugruppe mit einem gleichen Kraftaufwand für eine leichtere Person als unangenehm und zu heftig empfunden werden kann oder sogar zu Verletzungen und/oder Schmerzen führen kann. Um dem zu begegnen, soll die Geschwindigkeit beim Rotieren der Baugruppe und/oder die aufgewandte Kraft beim Rotieren der Baugruppe an die Person angepasst werden.

Das Gewicht der auf dem Sitz befindlichen Person kann über entsprechende Sensoren ermittelt werden und/oder mittels einer Abschätzung aus Bildaufnahmen einer Innenraumüberwachung des Fahrzeugs anhand der Statur und Größe der Person auf dem Sitz. Das ermittelte Gewicht kann dann dazu genutzt werden, die notwendige Kraft und/oder die Aufrichtgeschwindigkeit zum Aufrichten der Baugruppe zu bestimmen. Dies kann beispielsweise mithilfe einer Steuereinrichtung erfolgen, die in der Vorrichtung vorgesehen wird oder mit der diese zusammenwirkt. Die Anpassung der Geschwindigkeit und/oder des Kraftaufwandes kann mittels einer Anpassung über den Antrieb der Antriebswelle erfolgen. Ist beispielsweise ein Antrieb mittels einer Federeinrichtung vorgesehen, kann die Feder durch geeignete Maßnahmen in ihrer Federwirkung gedämpft werden, um die Geschwindigkeit beim Rotieren und/oder den Kraftaufwand zu reduzieren. Bei einem motorischen Antrieb kann ebendieser herunter geregelt werden.

Die Erfindung betrifft auch ein Fahrzeug mit mindestens einer Vorrichtung der vorbeschriebenen Art, sodass mindestens eine Lehne oder eine Sitzfläche eines verstellbaren Fahrzeugsitzes schnell im Sinne der Erfindung rotiert werden kann.

Mit der erfindungsgemäßen Vorrichtung kann eine Fahrzeuglehne bei Bedarf schnell in eine crashsichere Position rotiert werden. Die Vorrichtung eignet sich aber auch, um beispielsweise eine schnelle Rotation der Lehne für eine sogenannte "Easy-Entry-Lehne" zu bewirken, bei der die Lehne eines Vordersitzes eines Zweitürers schnell nach vorn rotiert werden soll, um einer Person den Einstieg zur Rücksitzbank zu erleichtern. Durch die Ausgestaltung mit zwei Nocken und das Zusammenwirken mit den übrigen in der Vorrichtung vorgesehenen Elementen bleibt die rotierte Baugruppe auch bei größeren äußeren Krafteinwirkungen in ihrer Position, sodass die Sicherheitseinrichtungen des Fahrzeugs ihre Wirkungen zum Schutz des oder der Fahrzeuginsassen voll entfalten können.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine beispielhaft ausgeführte Vorrichtung zum Aufrichten einer Lehne,
- Figur 2: die Vorrichtung aus Figur 1 aus einer anderen Richtung betrachtet,
- Figuren 3 bis 9: das Zusammenwirken der Komponenten beziehungsweise Elemente der Vorrichtung aus Figur 1,
- Figur 10: die erfindungsgemäße Vorrichtung aus Figur 1 im Kontext einer Lehne.

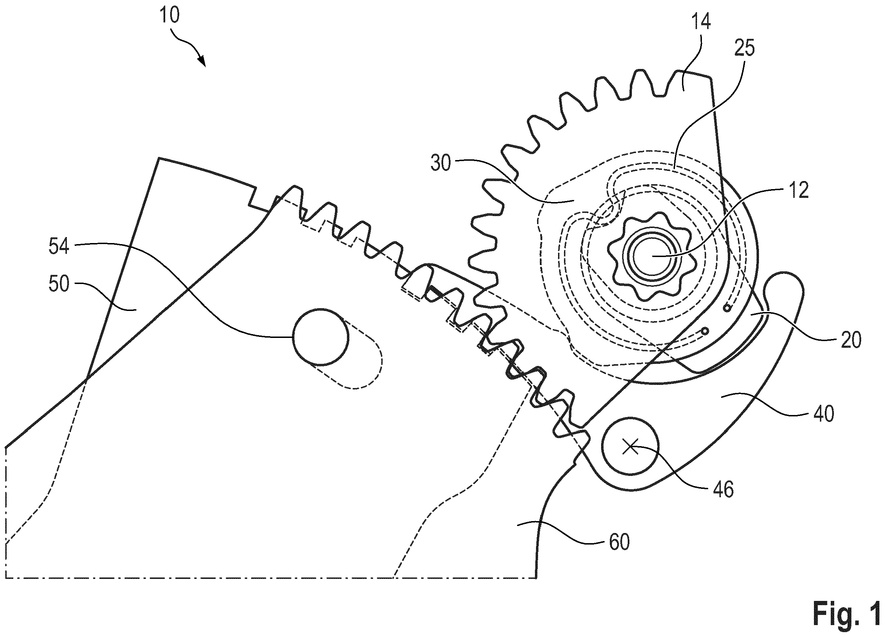

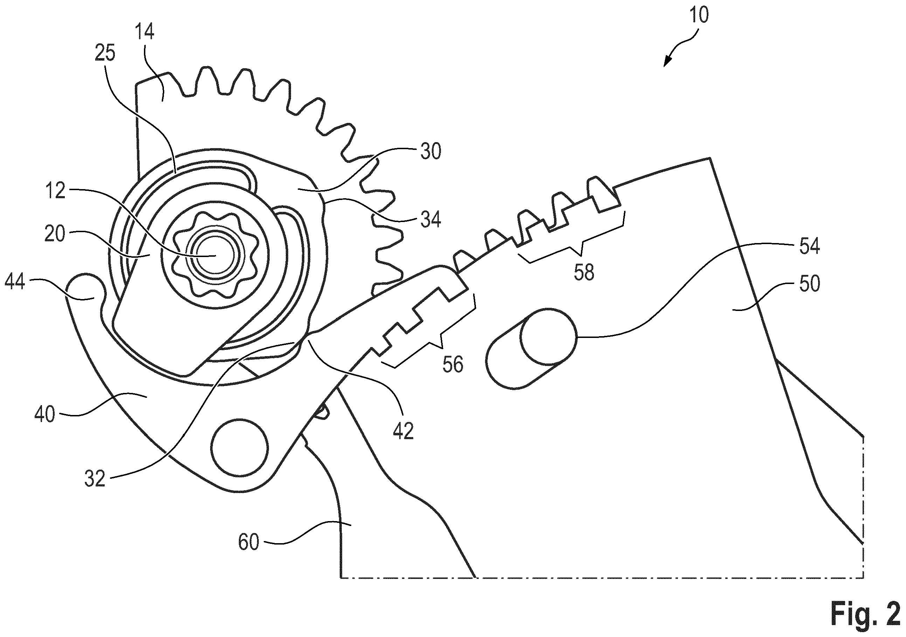

Figur 1 zeigt einen beispielhaften Aufbau der erfindungsgemäßen Vorrichtung 10 für die Anwendung in einer Baugruppe 100 in Form einer Lehne eines Fahrzeugsitzes. In Figur 2 wird die Vorrichtung von der Rückseite her gezeigt, und beide Figuren werden gemeinsam erläutert. Die Vorrichtung 10 ist zweifach in einer verstellbaren Lehne eines Fahrzeugsitzes in einem Fahrzeug vorgesehen. Grundsätzlich und in gleicher Weise kann die Vorrichtung 10 auch an einer Kniehebelkinematik einer Sitzfläche eines Fahrzeuges vorgesehen sein und deren Rotation bewirken.

Die Vorrichtung 10 ist mit einer Antriebswelle 12 und zwei darauf beziehungsweise daran angeordneten Nocken 20, 30 gebildet. Die Antriebswelle 12 ist lehnenfest rotierbar gelagert. Die erste Nocke 30 ist die Entriegelungsnocke und drehfest auf der Antriebswelle angeordnet. Die zweite Nocke 30 ist die Sicherungsnocke und drehbar gelagert. Die erste Nocke 20 und die zweite Nocke 30 sind mittels eines Federelementes 25 miteinander gekoppelt, sodass die zweite Nocke 30 bei einer Rotation der Antriebswelle mitrotiert.

Die zweite Nocke 30 weist eine erste Verrieglungskontur 32 und eine zweite Verriegelungskontur 34 auf, die jeweils als Ausformungen der ansonsten gleichmäßig gekrümmten Kontur der zweiten Nocke 30 ausgebildet sind.

Die Vorrichtung 10 weist weiter ein Ritzel 14 auf, mit dem die Rotation der Antriebswelle 12 auf ein Zahnelement 60 übertragen kann, das ebenfalls in der Vorrichtung 10 vorgesehen ist. Das Ritzel 14 ist lediglich als Kreissektor ausgeführt, um Bauraum und Material einzusparen. Der Öffnungswinkel des Kreissektors reicht aus, um eine ausreichende Rotationsbewegung der Antriebswelle 12 zum Aufrichten der Lehne zu übertragen.

Ein Verriegelungselement 40 ist baugruppenfest, in diesem Ausführungsbeispiel also lehnenfest rotierbar gelagert. Seine Rotationsachse ist in Figur 1 mit Bezugszeichen 46 gekennzeichnet.

Das Verriegelungselement 40 befindet sich im ersten Eingriffsbereich 56 in Eingriff mit dem Rastelement 50, einem weiteren Element der Vorrichtung 10. Das Rastelement 50 bildet mit dem Zahnelement 60 einen Eingriff 54 aus, der die Rotation des Zahnelementes 60 um die Lehnendrehachse (entspricht der Baugruppendrehachse, hier nicht gezeigt) begrenzt. Der Eingriff 54 ist dabei beispielhaft mit einer Ausnehmung im Rastelement 50 und einem am Zahnelement 60 angeordneten Pin ausgebildet, wobei der Pin im Eingriff mit der Ausnehmung ist und sich in ihr bewegen kann, wenn das Zahnelement 60 rotiert wird. Schlägt der Pin am Ende der Ausnehmung im Rastelement 50 an, ist die Rotationsbewegung des Zahnelementes 60 begrenzt und kann nicht fortgesetzt werden.

Das Verriegelungselement 40 weist zudem einen Verriegelungsbereich 42 und einen Entriegelungsbereich 44 auf, deren Wirken anhand der folgenden Figuren verdeutlicht wird.

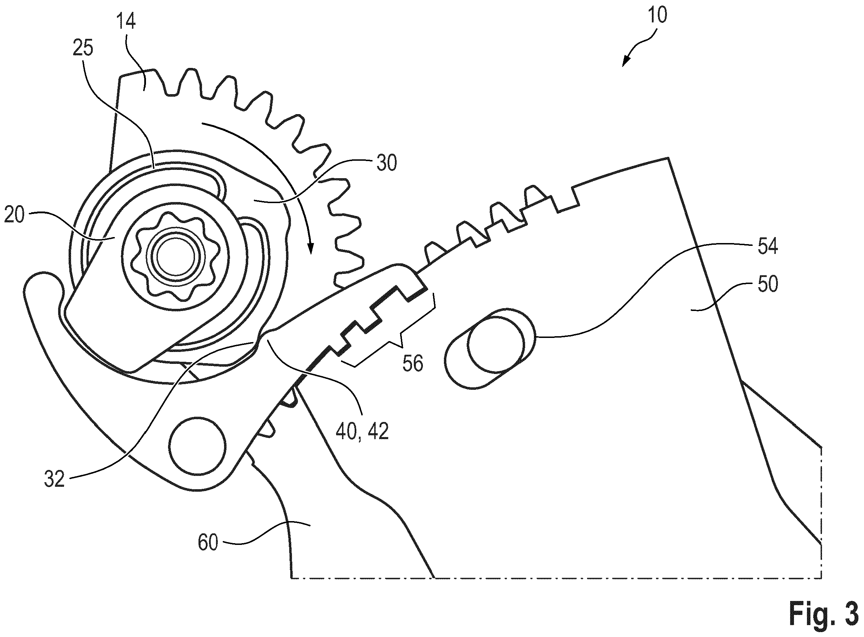

Die Figuren 2 bis 9 zeigen das Zusammenspiel der Elemente beziehungsweise Komponenten der erfindungsgemäßen Vorrichtung 10 beim Aufrichten der Lehne 100. Die Bewegungsrichtungen sind jeweils mit Pfeilen in den Figuren angezeigt.

In den Figuren 1 und 2 ist die Ausgangsposition der Vorrichtung 10 gezeigt. Die erste Verriegelungskontur 32 der zweiten Nocke 30 ist in Kontakt mit dem Verriegelungsbereich 42 des Verriegelungselementes 40 und sichert so dessen Position. Dabei ist das Verriegelungselement, wie schon erwähnt, im ersten Eingriffsbereich 56 des Rastelementes 50 mit diesem im Eingriff.

Nun beginnt die Antriebswelle 12 zu rotieren. Dabei bewegt sich das Ritzel 14 mit und überträgt die Rotation auf das Zahnelement 60. Dieses wird in der Folge um die Lehnendrehachse rotiert und bewegt sich, bezogen auf Figur 2, nach links. Dabei bewegt sich auch der Pin innerhalb der Ausnehmung im Rastelement 50 in Richtung seines Anschlages im Eingriff 54.

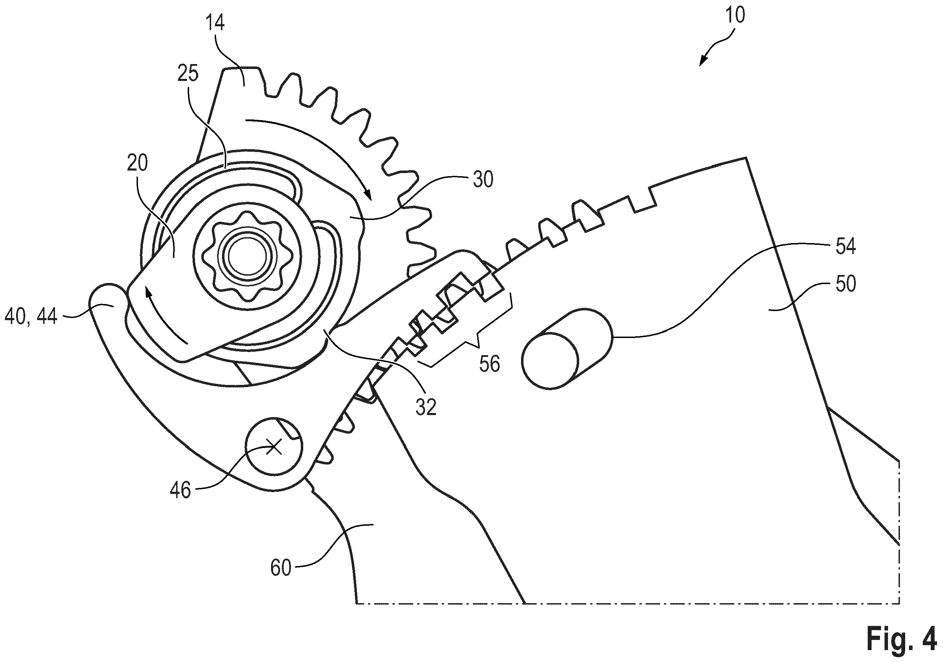

Durch die Rotation der Antriebswelle 12 wird die Sicherungsnocke (zweite Nocke) 30 mithilfe des Federelementes 25 während der Bewegung der ersten Nocke 20 mitrotiert, dabei vom Verriegelungsbereich 42 wegbewegt und gibt damit das Verriegelungselement 40 frei. Figur 4 zeigt, wie annähernd gleichzeitig die erste Nocke 20 auf den Entriegelungsbereich 44 des Verriegelungselementes 40 trifft und mit der weiteren Rotation das entsicherte Verriegelungselement 40 um seine Rotationsachse 46 nach außen rotiert, sodass der Eingriff mit dem Rastelement 50 aufgehoben wird.

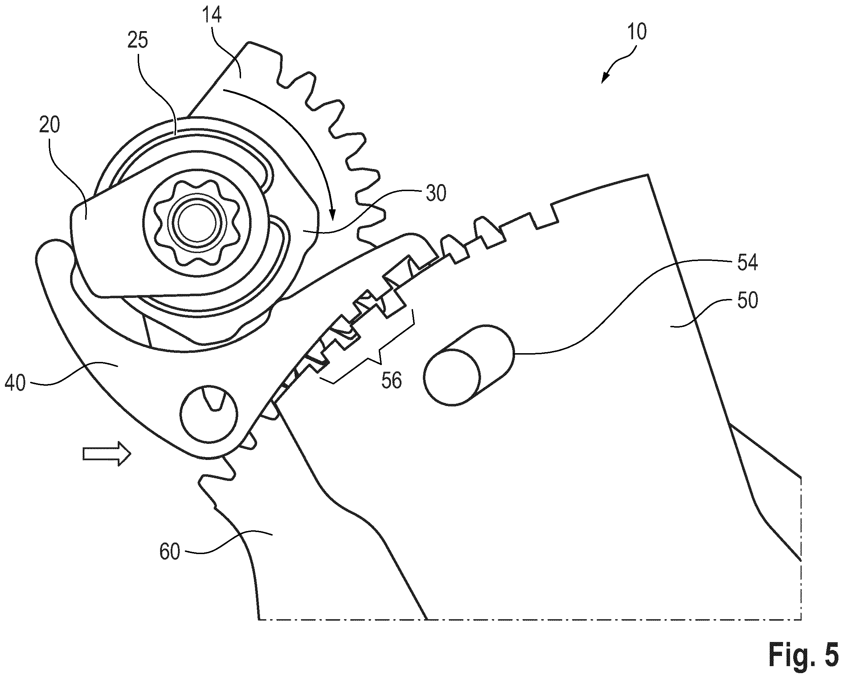

Die Antriebswelle 12 und mithin die darauf angeordneten Elementen rotieren weiter. Da in Figur 5 der Pin im Eingriff 54 angeschlagen ist, ist eine Rotation des Zahnelementes 60 in Relation zu dem Rastelement 50 nicht mehr möglich. Die Rotationsübertragung mittels des Ritzels 14 führt damit zu einem Vortrieb der Lehne entlang dem nun feststehenden Zahnelement 60, gekennzeichnet durch den nach rechts weisenden Pfeil in Figur 5.

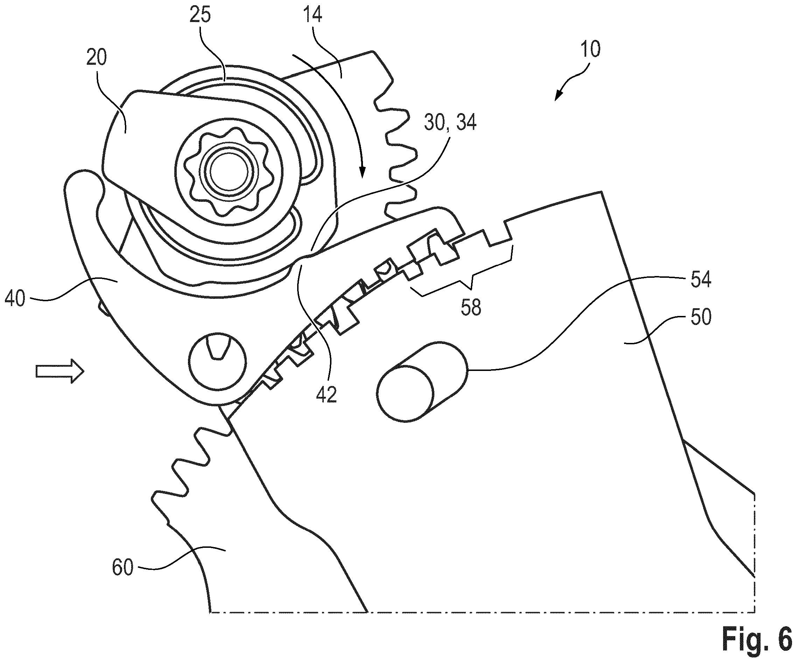

In Figur 6 dreht die Antriebswelle 12 weiter, die Vorwärtsbewegung der Lehne setzt sich fort. Dabei rotiert die erste Nocke 20 aus dem Entriegelungsbereich 44 des Verriegelungselementes 40 heraus. Außerdem trifft die zweite Verriegelungskontur 34 der zweiten Nocke 40 auf den Verriegelungsbereich 42 des Verriegelungselementes 40. Dieses hat sich zwar auf den zweiten Eingriffsbereich 58 am Rastelement 50 zubewegt, ist aber noch nicht mit diesem ein Eingriff gelangt. Daher ist der Rotationswinkel des Verriegelungselementes 40 noch nicht zurückgestellt und der Verriegelungsbereich 42 bildet ein Hindernis für die zweite Verriegelungskontur 34 der zweiten Nocke 30. Die Federkraft des Federelementes 25 zwischen erster Nocke 20 und zweiter Nocke 30 reicht nicht aus, um die Rotation der zweiten Nocke 30 fortzusetzen.

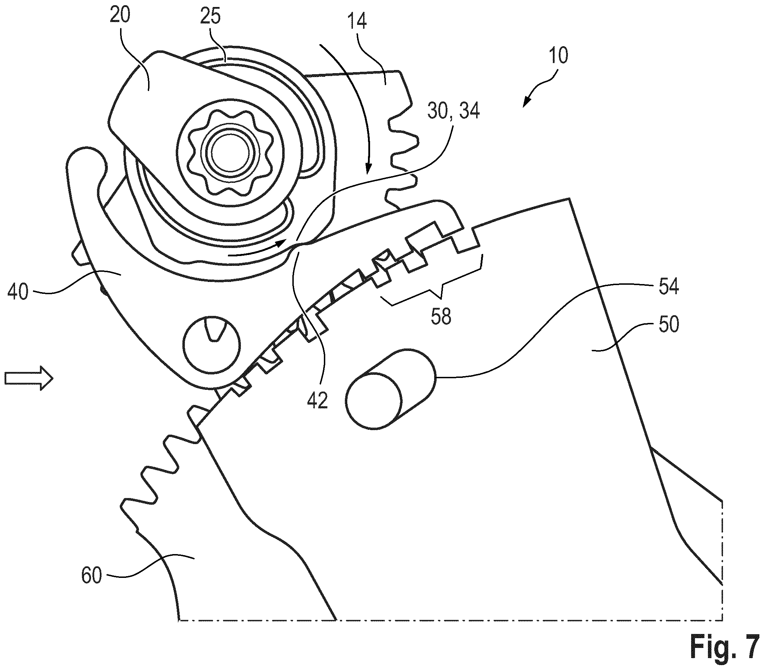

In Figur 7 ist ersichtlich, wie sich Antriebswelle 12, Ritzel 14 und erste Nocke 20 weiter drehen, während die zweite Nocke 30 in ihrer Position verbleibt und damit das Federelement 25 gespannt wird. Das Verriegelungselement 40 hat nahezu den zweiten Eingriffsbereich 58 mit dem Rastelement 50 erreicht.

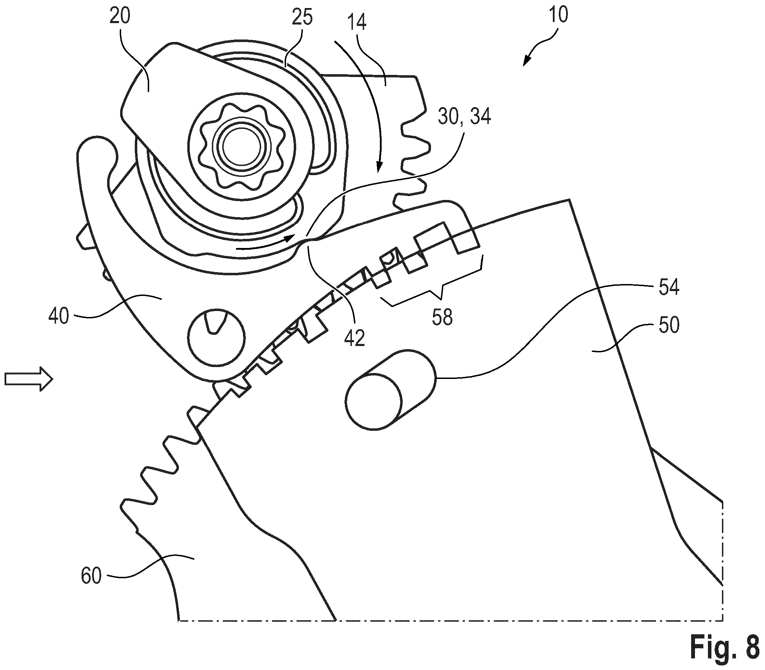

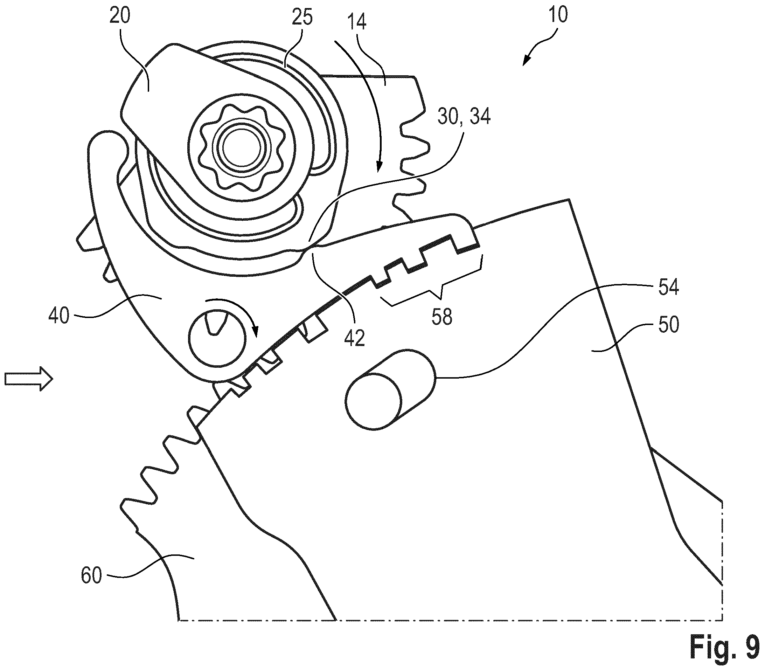

Das Ritzel rotiert in Figur 8 in seine Endlage. Dabei wird auch die notwendige Relativposition von Verriegelungselement 40 und Rastelement 50 erreicht, um in den zweiten Eingriffsbereich 58 einzugreifen, was in Figur 9 auch erfolgt. Durch den Eingriff von Rastelement 50 und Verriegelungselement 40 rotiert das Verriegelungselement 40 in seine Ausgangsposition zurück. Nun reicht die Federkraft des Federelementes 25 aus, um die Rotation der zweiten Nocke 30 fortzusetzen, sodass deren zweite Verriegelungskontur 34 sich über den Verriegelungsbereich des Verriegelungselementes 40 schiebt und dieses damit in der zweiten Verriegelungsposition sichert.

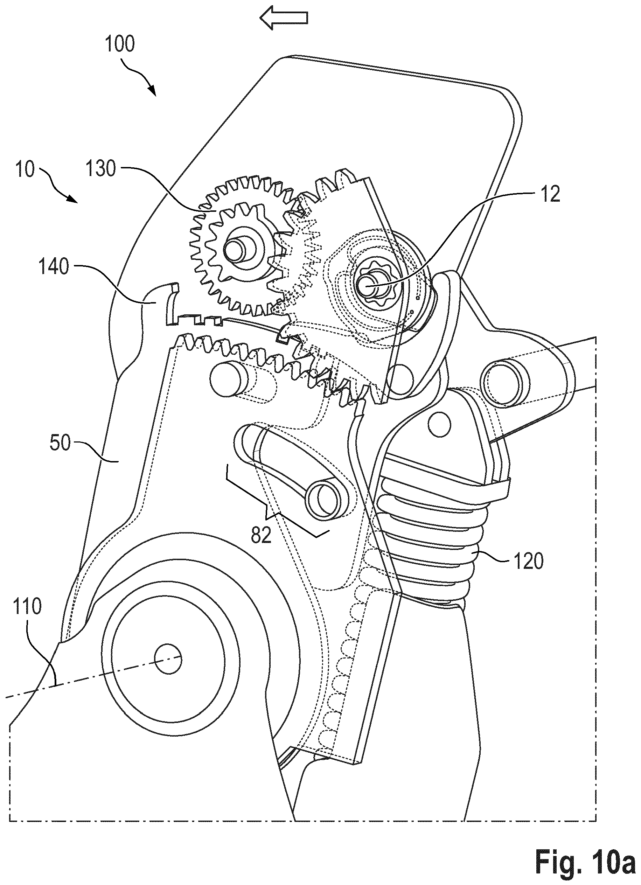

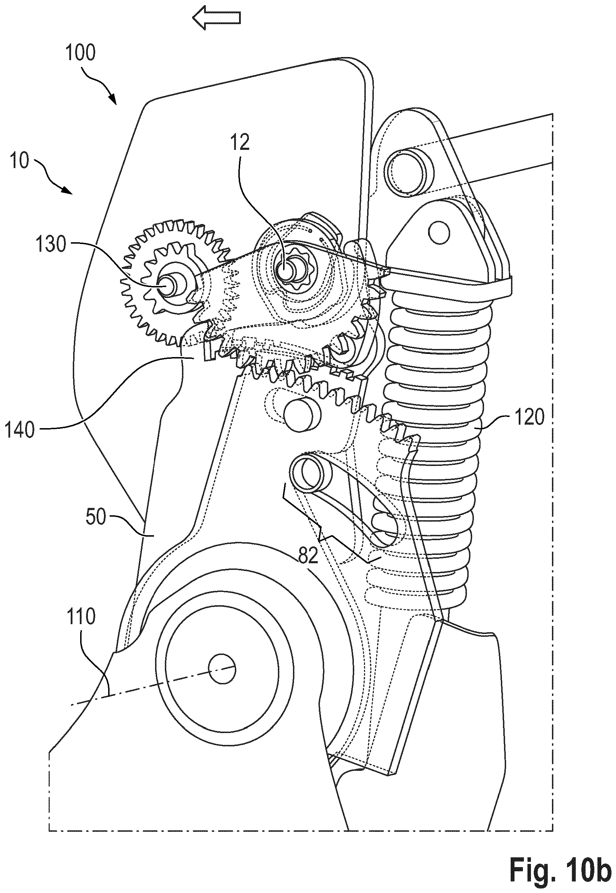

Figur 10 zeigt nun die erfindungsgemäße Vorrichtung 10 ausschnittsweise in einer Einbausituation in einer Fahrzeuglehne 100. Im Vergleich zu den vorherigen Figuren ist die Aufrichtrichtung der Lehne nun nach links gerichtet.

Die Lehne 100 rotiert um die Lehnendrehachse 110. Die Vorrichtung 10 soll ausgelöst werden, wenn ein Unfall unmittelbar bevorsteht, um den oder die Fahrzeuginsassen zu schützen. Die Antriebswelle 12 wird dabei mittels einer Federeinrichtung 120 angetrieben, die in der Ausgangsposition in Figur 10a gespannt und in Figur 10b kurz vor der Endposition weitgehend entspannt ist. Die Federeinrichtung 120 ist mit einem Auslösemechanismus (nicht gezeigt) ausgebildet, der von einer Steuereinrichtung, die den bevorstehenden Unfall detektiert, angesteuert werden kann, um ihn auszulösen. Mittels einer solchen Federeinrichtung 120 lässt sich die Lehne in unter 200 ms aufrichten, was der Vorlaufzeit zum Detektieren es unmittelbar bevorstehenden Unfalls entspricht.

Damit das Verrieglungselement 40 während der Vorwärtsrotation der Lehne 100 nicht über den zweiten Verriegelungsbereich 58 hinausbewegt wird, ist am Rastelement 50 ein Anschlag 140 vorgesehen. Damit wird das Verriegelungselement 40 in die zweite Verriegelungsposition geführt. Aus dem gleichen Grund, also der Begrenzung der Vorwärtsrotation der Lehne 100, ist der Eingriff 82 zwischen dem Rahmen 80 der Lehne und dem Zahnelement 60 mittels Ausnehmung und Pin vorgesehen.

Wenn nach dem Aufrichten der Lehne 100 der Wunsch besteht, die Vorrichtung 10 zurückzustellen, kann dies mittels der Rückstelleinrichtung 130 erfolgen, die in Figur 10a und 10b beispielhaft gezeigt ist. Sie ist hier mittels eines Elektromotors (nicht gezeigt) und einer Übersetzung auf das Ritzel 14 verwirklicht, sodass dieses rückwärts rotiert und dabei die Vorrichtung 10 in ihre Ausgangsposition zurückstellt.

### Bezugszeichenliste

- 10: Vorrichtung
- 12: Antriebswelle
- 14: Ritzel
- 20: erste Nocke (Entriegelungsnocke)
- 25: Federelement
- 30: zweite Nocke (Sicherungsnocke)
- 32: erste Verriegelungskontur
- 34: zweite Verriegelungskontur
- 40: Verriegelungselement
- 42: Verriegelungsbereich
- 44: Entriegelungsbereich
- 46: Rotationsachse Verriegelungselement
- 50: Rastelement
- 52: Anschlag Rastelement
- 54: Eingriff Rastelement mit Zahnelement
- 56: erster Eingriffsbereich
- 58: zweiter Eingriffsbereich
- 60: Zahnelement
- 70: Federeinrichtung
- 80: Lehnenrahmen
- 82: Eingriff Zahnelement mit Lehnenrahmen
- 100: rotierbare Baugruppe
- 110: Baugruppendrehachse
- 120: Federeinrichtung
- 130: Rückstelleinrichtung
- 140: Anschlag des Rastelementes 50

## Patentansprüche

1. Vorrichtung (10) zum schnellen Rotieren einer rotierbaren Baugruppe (100) eines Fahrzeugsitzes, wobei die rotierbare Baugruppe (100) eine Lehne oder eine Sitzfläche ist, mit
- einer ersten Nocke (20), einer zweiten Nocke (30), einer Antriebswelle (12) und einem Ritzel (14), wobei die erste Nocke (20) und das Ritzel (14) drehfest und die zweite Nocke (30) drehbar auf der Antriebswelle (12) angeordnet ist, die Antriebswelle (12) baugruppenfest rotierbar gelagert ist, die erste Nocke (20) mit der zweiten Nocke (30) mittels eines Federelementes (25) gekoppelt ist, sodass die zweite Nocke (30) bei einer Rotation der Antriebswelle (12) mitrotiert, und die zweite Nocke (30) eine erste Verriegelungskontur (32) und eine zweite Verriegelungskontur (34) aufweist,
- einem Verriegelungselement (40) mit einem Verriegelungsbereich (42) und einem Entriegelungsbereich (44), das baugruppenfest rotierbar gelagert sein kann,
- einem ortsfesten Rastelement (50), und
- einem um die Baugruppendrehachse (110) rotierbaren Zahnelement (60),
wobei diese Elemente ausgebildet und angeordnet sind, dass
• in einer ersten Verriegelungsposition
- das Verriegelungselement (40) im Eingriff mit dem Rastelement (50) steht, und
- die erste Verriegelungskontur (32) der zweiten Nocke (30) mit dem Verriegelungsbereich (42) des Verrieglungselementes in berührendem Kontakt steht und dieses in seiner Position sichert, und
• während der Rotation der Antriebswelle (12)
- die erste Nocke (20) auf den Entriegelungsbereich (44) des Verriegelungselementes (40) trifft und damit dieses aus dem Eingriff mit dem Rastelement (50) herausrotiert, während
- die erste Verriegelungskontur (32) der zweiten Nocke (30) aus dem Verriegelungsbereich (42) des Verriegelungselementes (40) rotiert wird, und
- das Ritzel (14) die Rotation auf das Zahnelement (60) überträgt, wobei das Zahnelement (60) um die Baugruppendrehachse (110), und damit relativ zu dem Rastelement (50) rotiert werden kann, bis ein Eingriff (54) mit dem Rastelement (50) die Rotationsbewegung begrenzt, und
• beim weiteren Kämmen des Ritzels (14) am Zahnelement (60)
- eine Rotation der rotierbaren Baugruppe (100) um die Baugruppendrehachse (110) resultiert werden kann, bis die zweite Verriegelungskontur (34) der zweiten Nocke (30) auf den Verriegelungsbereich (42) des Verriegelungselementes (40) trifft, der ausgebildet ist, die weitere Rotation der zweiten Nocke (30) aufzuhalten, bis das Verriegelungselement (40) mit dem Rastelement (50) für eine zweite Verriegelungsposition in Eingriff gelangt, und
- die Rotation der zweiten Nocke (30) mittels der Federkraft des Federelementes (25) nachgeführt wird und damit die zweite Verriegelungskontur (34) zu dem Verriegelungsbereich (42) des Verriegelungselementes (40) rotiert, um dieses in seiner Position zu sichern.

2. Vorrichtung (10) nach Anspruch 1, **dadurch gekennzeichnet, dass** die Antriebswelle (12) mittels eines Motors, eines Gasgenerators oder einer Federeinrichtung (70) anzutreiben ist.

3. Vorrichtung (10) nach Anspruch 1 oder 2, **dadurch gekennzeichnet, dass** das Zahnelement (60) einen Eingriff mit einem baugruppenfest gelagerten Bauelement aufweist, um die Relativbewegung der rotierbaren Baugruppe (100) in Bezug zu dem Zahnelement (60) zu begrenzen.

4. Vorrichtung (10) nach einem der vorhergehenden Ansprüche, **dadurch gekennzeichnet, dass** das Rastelement (50) einen Anschlag (52) und/oder im Bereich des Eingriffs für die zweite Verriegelungsposition angefaste Kanten aufweist, um das Verriegelungselement (40) in die zweite Verriegelungsposition zu leiten.

5. Vorrichtung (10) nach einem der vorhergehenden Ansprüche, **dadurch gekennzeichnet, dass** die Grundfläche des Ritzels (14) als Kreissektor ausgebildet ist, wobei der Öffnungswinkel des Kreissektors so weit reduziert ist, dass lediglich der notwendige Bewegungsübertrag auf das Zahnelement (60) erfolgt.

6. Vorrichtung (10) nach einem der vorhergehenden Ansprüche, **dadurch gekennzeichnet, dass** sie mit einer Steuereinrichtung des Fahrzeugs verbunden ist, um bei einem bevorstehenden Unfall ausgelöst zu werden.

7. Vorrichtung (10) nach einem der vorhergehenden Ansprüche, **dadurch gekennzeichnet, dass** die Rotation der rotierbaren Baugruppe (100) zurückzustellen ist, insbesondere motorisch zurückzustellen ist.

8. Vorrichtung (10) nach einem der vorhergehenden Ansprüche, **dadurch gekennzeichnet, dass** die Geschwindigkeit und/oder die aufgewandte Kraft beim Rotieren der rotierbaren Baugruppe (100) in Abhängigkeit vom Gewicht der auf dem Fahrzeugsitz befindlichen Person anzupassen ist.

9. Fahrzeugsitz mit durch Rotation verstellbarer Baugruppe (100), der mit mindestens zwei Vorrichtungen (10) nach einem der vorhergehenden Ansprüche ausgebildet ist.

10. Fahrzeug mit mindestens einer Vorrichtung (10) zum schnellen Rotieren einer rotierbaren Baugruppe (100) nach einem der Ansprüche 1 bis 8.

## Claims

1. A device (10) for quickly rotating a rotatable assembly (100) of a vehicle seat, the rotatable assembly (100) being a rest or seat, comprising
- a first cam (20), a second cam (30), a drive shaft (12) and a sprocket (14), the first cam (20) and the sprocket (14) being non-rotatably arranged on the drive shaft (12) and the second cam (30) being rotatably arranged thereon, the drive shaft (12) being rotatably mounted on the assembly, the first cam (20) being coupled to the second cam (30) by means of a spring element (25) such that, when the drive shaft (12) rotates, the second cam (30) also rotates, the second cam (30) having a first locking contour (32) and a second locking contour (34),
- a locking element (40) having a locking region (42) and an unlocking region (44) that can be rotatably fixed to the assembly,
- a stationary latching element (50), and
- a toothed element (60) which is rotatable about the assembly axis of rotation (110),
these elements being formed and arranged such that,
• in a first locking position,
- the locking element (40) is engaged with the latch element (50), and
- the first locking contour (32) of the second cam (30) is in physical contact with the locking region (42) of the locking element and secures said locking element in position, and
• while the drive shaft (12) is rotated,
- the first cam (20) hits the unlocking region (44) of the locking element (40) and thus rotates said locking element out of the engagement with the locking element (50), while
- the first locking contour (32) of the second cam (30) is rotated out of the locking region (42) of the locking element (40), and
- the sprocket (14) transfers the rotation to the toothed element (60), the toothed element (60) being rotatable about the assembly axis of rotation (110) and thus relative to the latching element (50) until an engagement (54) with the latching element (50) limits the rotational movement, and
• upon further meshing of the sprocket (14) with the toothed element (60),
- the rotatable assembly (100) can, as a result, rotate about the assembly axis of rotation (110) until the second locking contour (34) of the second cam (30) meets the locking region (42) of the locking element (40), said locking region being formed to stop further rotation of the second cam (30) until the locking element (40) engages with the latching element (50) for a second locking position, and
- the rotation of the second cam (30) is tracked by means of the spring force of the spring element (25) and thus the second locking contour (34) rotates towards the locking region (42) of the locking element (40) in order to secure said locking element in position.

2. The apparatus (10) according to Claim 1, **characterized in that** the drive shaft (12) can be driven by means of a motor, a gas generator or a spring device (70).

3. The apparatus (10) according to Claim 1 or 2, **characterized in that** the toothed element (60) has an engagement having a component fixedly mounted on the assembly in order to limit the relative movement of the rotatable assembly (100) relative to the toothed element (60).

4. The apparatus (10) according to any of the preceding claims, **characterized in that** the latching element (50) has a stop (52) and/or has chamfered edges in the region of the engagement for the second locking position in order to guide the locking element (40) into the second locking position.

5. The apparatus (10) according to any of the preceding claims, **characterized in that** the footprint of the sprocket (14) is formed as a circle segment, the opening angle of the circle segment being reduced to such an extent that only necessary movement is transferred to the toothed element (60).

6. The apparatus (10) according to any of the preceding claims, **characterized in that** it is connected to a control device of the vehicle in order to be triggered in the event of an imminent accident.

7. The apparatus (10) according to any of the preceding claims, **characterized in that** the rotation of the rotatable assembly (100) is able to be reset, in particular by a motor.

8. The apparatus (10) according to any of the preceding claims, **characterized in that**, when the rotatable assembly (100) is rotated, the speed and/or the expended force is able to be adjusted depending on the weight of the person located on the vehicle seat.

9. A vehicle seat having an assembly (100) which is adjustable by rotation and is formed to have at least two apparatuses (10) according to any of the preceding claims.

10. A vehicle having at least one device (10) for quickly rotating a rotatable assembly (100) according to any of Claims 1 to 8.

## Revendications

1. Dispositif (10) destiné à faire tourner rapidement un module rotatif (100) d'un siège de véhicule, dans lequel le module rotatif (100) est un dossier ou une surface de siège, comprenant
- une première came (20), une seconde came (30), un arbre d'entraînement (12) et un pignon (14), dans lequel la première came (20) et le pignon (14) sont disposés de manière fixe solidaire en rotation et la seconde came (30) est disposée de manière rotative sur l'arbre d'entraînement (12), l'arbre d'entraînement (12) est monté rotatif de manière fixe solidaire au module, la première came (20) est couplée à la seconde came (30) à l'aide d'un élément de ressort (25) de telle sorte que la seconde came (30) tourne conjointement lors d'une rotation de l'arbre d'entraînement (12), et la seconde came (30) présente un premier contour de verrouillage (32) et un second contour de verrouillage (34),
- un élément de verrouillage (40) avec une zone de verrouillage (42) et une zone de déverrouillage (44) qui peut être montée rotative de manière fixe solidaire au module,
- un élément d'encliquetage fixé à demeure (50), et
- un élément denté (60) rotatif autour de l'axe de rotation (110) de module,
dans lequel ces éléments sont conçus et disposés de telle sorte que
• dans une première position de verrouillage
- l'élément de verrouillage (40) vient en prise avec l'élément d'encliquetage (50), et
- le premier contour de verrouillage (32) de la seconde came (30) vient en contact tangent avec la zone de verrouillage (42) de l'élément de verrouillage et maintient celui-ci dans sa position et
• pendant la rotation de l'arbre d'entraînement (12)
- la première came (20) rencontre la zone de déverrouillage (44) de l'élément de verrouillage (40), ce qui lui permet de tourner pour sortir de la prise avec l'élément d'encliquetage (50), pendant que
- le premier contour de verrouillage (32) de la seconde came (30) tourne hors de la zone de verrouillage (42) de l'élément de verrouillage (40) et
- le pignon (14) transmet la rotation à l'élément denté (60), l'élément denté (60) pouvant être tourné autour de l'axe de rotation (110) de module, et donc par rapport à l'élément d'encliquetage (50), jusqu'à ce qu'une prise (54) avec l'élément d'encliquetage (50) limite le mouvement de rotation, et
• lors d'un engrènement supplémentaire du pignon (14) sur l'élément denté (60)
- une rotation du module rotatif (100) autour de l'axe de rotation (110) de module peut en résulter jusqu'à ce que le second contour de verrouillage (34) de la seconde came (30) rencontre la zone de verrouillage (42) de l'élément de verrouillage (40), laquelle est formée pour arrêter une rotation supplémentaire de la seconde came (30) jusqu'à ce que l'élément de verrouillage (40) arrive en prise avec l'élément d'encliquetage (50) pour une seconde position de verrouillage, et
- la rotation de la seconde came (30) est asservie à l'aide de la force de ressort de l'élément de ressort (25) et ainsi le second contour de verrouillage (34) tourne par rapport à la zone de verrouillage (42) de l'élément de verrouillage (40) pour maintenir celui-ci dans sa position.

2. Dispositif (10) selon la revendication 1, **caractérisé en ce que** l'arbre d'entraînement (12) doit être entraîné à l'aide d'un moteur, d'un générateur de gaz ou d'un moyen à ressort (70).

3. Dispositif (10) selon la revendication 1 ou 2, **caractérisé en ce que** l'élément denté (60) présente une prise avec un composant monté de manière fixe solidaire au module afin de limiter le mouvement relatif du module rotatif (100) par rapport à l'élément denté (60).

4. Dispositif (10) selon l'une quelconque des revendications précédentes, **caractérisé en ce que** l'élément d'encliquetage (50) présente une butée (52) et/ou des bords rognés au niveau de la prise pour la seconde position de verrouillage afin de guider l'élément de verrouillage (40) dans la seconde position de verrouillage.

5. Dispositif (10) selon l'une quelconque des revendications précédentes, **caractérisé en ce que** la surface de base du pignon (14) est conçue sous la forme d'un secteur circulaire, dans lequel l'angle d'ouverture du secteur circulaire est réduit de telle sorte que seule la transmission nécessaire du mouvement sur l'élément denté (60) soit effectuée.

6. Dispositif (10) selon l'une quelconque des revendications précédentes, **caractérisé en ce qu'**il est relié à un moyen de commande du véhicule pour être déclenché dans le cas d'un accident imminent.

7. Dispositif (10) selon l'une quelconque des revendications précédentes, **caractérisé en ce que** la rotation du module rotatif (100) doit être réinitialisée, en particulier doit être réinitialisée par un moteur.

8. Dispositif (10) selon l'une quelconque des revendications précédentes, **caractérisé en ce que** la vitesse et/ou la force appliquée lors de la rotation du module rotatif (100) doit être adaptée en fonction du poids de la personne se trouvant sur le siège de véhicule.

9. Siège de véhicule avec un module (100) réglable par rotation, lequel est formé avec au moins deux dispositifs (10) selon l'une quelconque des revendications précédentes.

10. Véhicule comprenant au moins un dispositif (10) de rotation rapide d'un module rotatif (100) selon l'une quelconque des revendications 1 à 8.
